# EUROPÄISCHE PATENTSCHRIFT

(11) **EP 1 637 023 B1**
(45) Veröffentlichungstag und Bekanntmachung des Hinweises auf die Patenterteilung: **15.06.2011**
(21) Anmeldenummer: 05017454.9
(22) Anmeldetag: 11.08.2005
(51) Int. Cl.: A01B 45/02, A01D 34/54, A01D 34/74

(54) **Höheneinstellung an einem fahrbaren Arbeitsgerät**
hight adjustment for rolling working implement
ajustement en hauteur pour outil de travail roulant

(30) Priorität: 16.09.2004 DE 102004045338
(43) Veröffentlichungstag der Anmeldung: 22.03.2006
(73) Patentinhaber: Viking GmbH, 6336 Langkampfen (AT)
(72) Erfinder: Duregger, Georg, 6342 Niederndorf (AT)
(74) Vertreter: Wasmuth, Rolf

(56) Entgegenhaltungen:
- DE-A1- 2 349 551
- DE-A1- 4 238 414
- DE-U1- 29 719 002
- FR-A- 2 359 686
- GB-A- 2 371 202
- US-A- 2 810 251
- US-A- 3 702 016
- US-A- 4 577 455
- US-A- 5 381 648
- US-A- 5 842 329

## Beschreibung

Die Erfindung betrifft ein fahrbares Arbeitsgerät, insbesondere einen Rasenmäher, Vertikutierer oder dgl. nach dem Oberbegriff des Anspruchs 1 (siehe z.B. GB-A-2 371 202).

Aus der DE 297 08 651 U1 ist ein Vertikutierer bekannt, dessen Messerwelle gehäusefest gelagert ist. Das Gehäuse ist mit Laufrädern versehen, die jeweils über einen Winkelhebel höhenverstellbar am Gehäuse gehalten sind. Die freien Enden der Winkelhebel sind über einen Stellhebel bzw. Translationshebel miteinander verbunden, so daß die Verstellung an einer Achse zeitgleich eine identische Verstellung an der anderen Achse bewirkt. Mit einer derartigen Höheneinstellvorrichtung ist die Arbeitshöhe des Arbeitswerkzeugs einfach einstellbar.

Um die Höheneinstellvorrichtung vom Lenker aus bedienen zu können, ist der Stellhebel über einen Bowdenzug mit einem Rasthebel verbunden, der im Bereich des Lenkers in vorgebbaren Stellungen an einer Rastleiste verriegelt werden kann.

Der Erfindung liegt die Aufgabe zugrunde, eine Höheneinstellvorrichtung für ein Arbeitswerkzeug derart am Arbeitsgerät zu integrieren, daß einerseits eine ergonomisch vorteilhafte Höhenverstellung auszuführen ist und andererseits der hierfür notwendige konstruktive Aufwand minimiert ist.

Die Aufgabe wird erfindungsgemäß nach den kennzeichnenden Merkmalen des Anspruchs 1 gelöst.

Die Ausbildung des Rastelementes als verschwenkbarer Rasthebel innerhalb eines Handgriffs gibt dem Benutzer in ergonomisch einfacher Weise die Möglichkeit, mit geringem Kraftaufwand nach Lösen der Verriegelung die Höhenverstellung vorzunehmen. Dabei liegt der Rasthebel mit seinem Betätigungsabschnitt in der Freigabestellung weitgehend in der Kontur des Handgriffs, so daß dieser ausschließlich zum Einleiten von Verstellkräften genutzt werden kann. In der Raststellung steht der Betätigungsabschnitt des Rasthebels aus der Kontur des Handgriffes hervor, wodurch der Benutzer optisch einfach erkennen kann, daß die eingestellte Arbeitshöhe verriegelt und das Gerät betriebsbereit ist.

Wird der Handgriff am Gehäuse des Arbeitsgerätes festgelegt, wird das Rastelement bevorzugt auf der dem Gehäuse zugewandten Seite des Handgriffes angeordnet, wodurch ein Schutz gegen unbeabsichtigtes Verstellen gegeben ist. Zwischen Handgriff und Gehäuse verbleibt ein Eingriffsraum, in den vom Benutzer gezielt eingegriffen werden muß, um eine Höhenverstellung auszuführen.

In einfacher Weise kann die eingestellte Höhe optisch angezeigt werden, indem ein Anzeigeelement mit dem Stellhebel verbunden wird und das Anzeigeelement unter einem gehäusefesten Fenster liegt. Da der Stellhebel bei der Verstellung eine translatorische Bewegung ausführt, wird das Anzeigeelement in Längsrichtung des Hebels verschoben, wodurch die eingestellte Höhe zum Beispiel durch im Fenster sichtbar werdende Zahlen anzeigbar ist.

Bevorzugt ist der Stellhebel in Stellrichtung auf eine maximale Höhe federbelastet, so daß der Benutzer beim Verstellen nicht das gesamte Gewicht des Gerätes anheben muß, sondern nur ein Teilgewicht. Zweckmäßig ist die Feder so ausgebildet, daß die Höhenverstellung im wesentlichen gewichtsneutral erfolgen kann.

Erfindungsgemäß kann mit der Höheneinstellvorrichtung des Arbeitsgerätes eine Lenkerhöhenverstellung kombiniert werden. Mit der Lenkerhöhenverstellung kann die Lenkerhöhe auf die Größe eines Benutzers angepaßt werden.

Hierzu ist das Lenkergestänge um eine Verschwenkachse höheneinstellbar am Gehäuse festgelegt, wozu gehäuseseitig Tragflansche vorgesehen sind, an welchen die gehäuseseitigen Enden des Lenkergestänges festgelegt werden. Dabei überlappt der Endabschnitt des Lenkergestänges den Endabschnitt eines Tragflansches. Zweckmäßig wird dabei im Bereich des Endes des Tragflansches das Lenkergestänge verschwenkbar festgelegt und im Bereich des Endes des Lenkergestänges eine Feststellvorrichtung angeordnet, die insbesondere als Klemmvorrichtung ausgebildet ist.

Die Feststellvorrichtung wird durch eine Spannstange gebildet, die beide Enden des Lenkergestänges durchragt und an einem Ende über eine Feststellschraube eine axiale Spannkraft aufbringt. Wird die Spannstange gekröpft, ist auf einfache Weise eine elastische Vorspannung aufbringbar, die in allen Betriebssituationen eine sichere Festlegung des Lenkergestänges gewährleistet.

Auf der Verschwenkachse des Lenkergestänges ist vorteilhaft eine Tellerfeder montiert, deren Federkraft den Endabschnitt des Lenkergestänges an den Tragflansch andrückt. Im Bereich des Endes des Lenkergestänges weist der Tragflansch eine vorzugsweise geprägte Rastzahnung auf, die mit einer am Endabschnitt des Lenkergestänges ausgebildeten Gegenzahnung zusammenwirkt. Nach Lösen der Stellschraube ist die Klemmkraft aufgehoben und die Gegenzahnung des Lenkergestänges wird unter Wirkung der Kraft der Tellerfeder im Eingriff in der Rastzahnung gehalten. Die Höhenlage des Lenkers kann nun vom Benutzer geändert werden, wobei die Gegenzahnung federnd über die Rastzahnung läuft. Durch den federnden Eingriff bleibt jede gewählte Höhenlage stabil, d. h., der Benutzer kann den Lenker loslassen, ohne daß sich die Höhenlage durch die Gewichtskräfte selbständig ändert. Nach Festziehen der Stellschraube ist eine gewählte Höhenlage fixiert, so daß die Lenkerkräfte sicher aufgenommen werden.

Weitere Merkmale der Erfindung ergeben sich aus der weiteren Ansprüchen, der Beschreibung und der Zeichnung, in der nachfolgend im einzelnen beschriebene Ausführungsbeispiele dargestellt sind. Es zeigen:
- Fig. 1: in Seitendarstellung einen Rasenmäher mit einer Arbeitshöheneinstellungvorrichtung und einer Lenkerhöhenverstellung,
- Fig. 2: in vergrößerter Darstellung ein Detail II aus Fig. 1,
- Fig. 3: eine Seitenansicht auf ein teilmontiertes Gehäuse mit Darstellung der Arbeitshöheneinstellvorrichtung,
- Fig. 4: in vergrößerter Darstellung die Einzelheit IV aus Fig. 3,
- Fig. 5: eine schematische Seitenansicht auf die Lenkerhöhenverstellung,
- Fig. 6: eine Ansicht von unten auf die Lenkerhöhenverstellung,
- Fig. 7: eine perspektivische Teilansicht der Lenkerhöhenverstellung nach Fig. 5,
- Fig. 8: eine Seitenansicht auf die Lenkerhöhenverstellung gemäß Fig. 5 mit einem endseitigen Spannkopf der Spannstange,

- Fig. 9: in vergrößerter Darstellung einen Schnitt längs der Linie IX - IX in Figur 5.

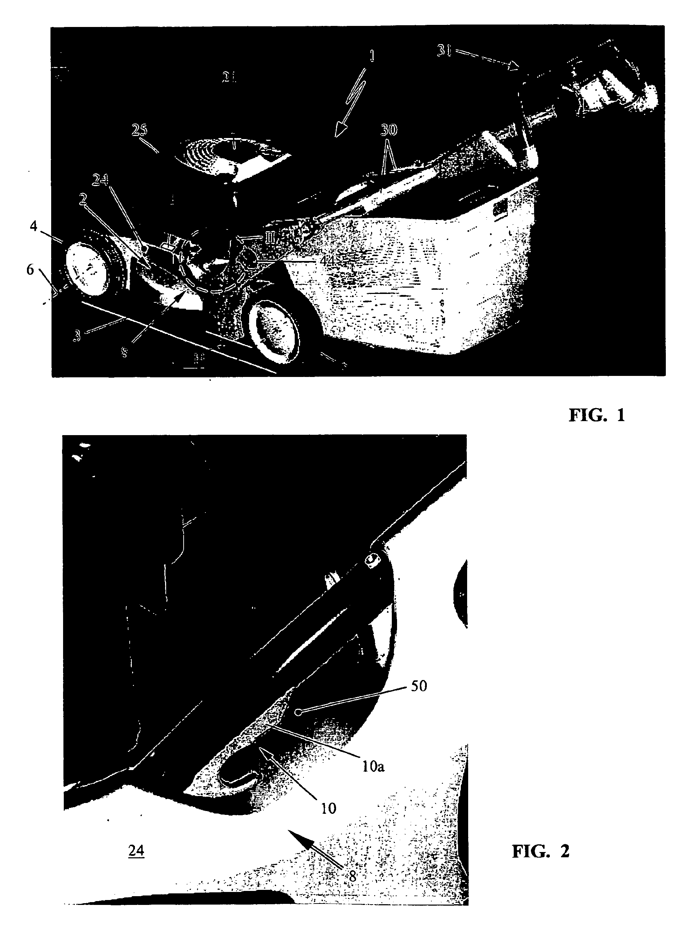

In Fig. 1 ist ein fahrbares Arbeitsgerät 1 am Beispiel eines Rasenmähers dargestellt; das Arbeitsgerät kann auch als Vertikutierer oder dgl. Arbeitsgerät ausgebildet sein.

Im Ausführungsbeispiel besteht das Arbeitsgerät 1 im wesentlichen aus einem Gehäuse 2, in dem ein drehbares Arbeitswerkzeug, z. B. ein Messerblatt, drehbar gelagert und von einem auf dem Gehäuse 2 angeordneten Antriebsmotor 21 angetrieben ist. Im Ausführungsbeispiel des Rasenmähers ist das Messerblatt innerhalb des Gehäuses 2 höhenfest angeordnet; zur Verstellung der Arbeitshöhe ist das gesamte Gehäuse 2 zusammen mit dem Antriebsmotor 21 relativ zur Aufstandsfläche 3 höhenverstellbar.

Das Gehäuse 2 weist vordere und hintere Laufräder 4, 5 auf, die einzeln am Gehäuse 2 höhenverstellbar gelagert sein können; im Ausführungsbeispiel sind zwei vordere Laufräder 4 an einer gemeinsamen vorderen Achse 6 und zwei hintere Laufräder 5 an einer gemeinsamen hinteren Achse 7 befestigt. Die Arbeitshöheneinstellvorrichtung 8 umfaßt einen Stellhebel 9, dessen eines Ende 11 über einen gehäusefest verschwenkbaren Winkelhebel 13 mit der vorderen Radachse 6 verbunden ist, während das andere Ende des Stellhebels in entsprechender Weise mit der hinteren Radachse 7 gekoppelt ist. Die Kopplung der vorderen Laufräder 4 und der hinteren Laufräder 5 über eine gemeinsame Stellstange 9 entspricht einem Aufbau, wie er in dem deutschen Gebrauchsmuster DE 297 08 651 U1 der Anmelderin für einen Vertikutierer beschrieben ist. Auf die Offenbarung des Gebrauchsmusters wird ausdrücklich Bezug genommen.

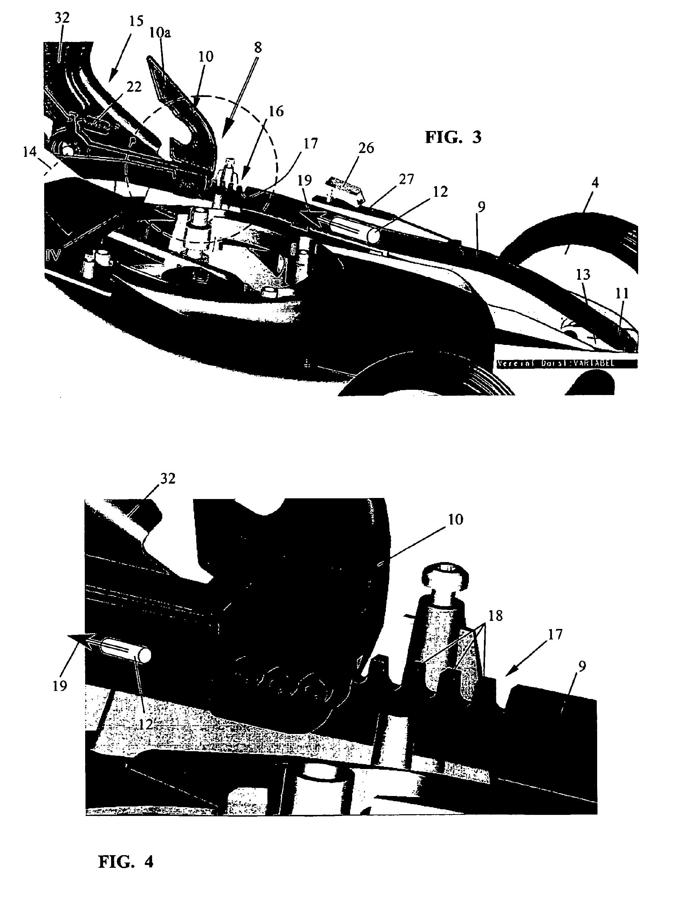

Der Stellhebel 9 ist, wie in den Fig. 3 und 4 angedeutet, über eine Zugfeder 12 in Stellrichtung 19 auf eine maximale Höhe federbelastet. Die jeweils gewählte Höheneinstellung wird über einen Rasthebel 10 festgelegt, der im Bereich 15 einer Gehäuseanbindung eines Lenkergestänges 30 verschwenkbar gelagert ist. Die Verschwenkachse 14 liegt etwa parallel zu den Radachsen 6 und 7.

Der Rasthebel 10 greift in einem Bereich 16 des Stellhebels 9 in eine Rastleiste 17 ein, die aus in Längsrichtung des Stellhebels 9 hintereinander angeordneten Rastzähnen 18 besteht. Die Rastleiste 17 liegt in einem Bereich 16 zwischen den Laufradachsen 6 und 7, wobei sie bevorzugt näher zur hinteren Radachse 7 liegt. Der Rasthebel 10 greift mit Rastzähnen in die Rastleiste 17 ein, wobei aufgrund der in Pfeilrichtung 19 wirkenden Zugfeder 12 und der Lage der Verschwenkachse 14 des Rasthebels 10 geringfügig oberhalb der maximalen Höhenlage des Stellhebels 9 eine Selbsthemmung der Verrastung gegeben ist.

Der Rasthebel 10 ist derart angeordnet, daß sein Betätigungsabschnitt 10a in einer Freigabestellung in die Kontur eines Handgriffs 20 eintaucht, während er in einer Raststellung - wie sie zum Beispiel in Fig. 2 dargestellt ist - aus der Kontur des Handgriffs 20 vorsteht.

Der Handgriff 20 ist am Gehäuse 2 des Arbeitsgerätes 1 festgelegt, wobei er - wie die Fig. 1 und 2 zeigen - im wesentlichen als Fortsetzung des Lenkergestänges 30 in einem Bereich oberhalb des Gerätegehäuses 2 angeordnet ist. Das Betätigungselement 10 ist auf der dem Gehäuse 2 zugewandten Seite des Handgriffes 20 vorgesehen, wobei zwischen dem Handgriff 20 und dem Gehäuse 2 ein Eingriffsraum 50 für die Hand des Benutzers verbleibt. Eine Verkleidung 24 der Höheneinstellvorrichtung 8 begrenzt den in Umfangsrichtung geschlossenen Eingriffsraum 50 zusammen mit dem Handgriff 20.

Um die Arbeitshöhe H des Arbeitsgerätes 1 relativ zur Aufstandsfläche 3 einzustellen, wird der aus der Kontur des Handgriffs 20 hervorstehende Betätigungsabschnitt 10a des Rasthebels 10 niedergedrückt, so daß der Betätigungsabschnitt 10a in die Kontur des Handgriffs 20 eintaucht. Dabei wird der Handgriff 20 von der Hand des Benutzer vollständig umschlossen, so daß er - sobald die Verriegelung aufgehoben ist - zur Höheneinstellung das Gehäuse 2 anheben oder niederdrücken kann. Beim Anheben wirkt die Feder 12 gewichtsentlastend, so daß die Bedienungsperson nicht das vollständige Gewicht des Arbeitsgerätes 1 heben muß. Bevorzugt ist die Zugfeder 12 derart ausgelegt, daß die Höhenverstellung des Gerätes im wesentlichen gewichtsneutral erfolgen kann. Zum Absenken der Höhe muß der Benutzer nach der Entriegelung der Rastvorrichtung das Gerät 1 lediglich nach unten drücken. Sobald der Betätigungsabschnitt 10a losgelassen wird, rastet der Rasthebel 10 unter der Wirkung einer Zugfeder 22 in die Rastleiste 17 ein und verriegelt damit den Stellhebel 9 der Höheneinstellvorrichtung 8 auf dem Stellhebel 9 gerätefest. Damit sind auch die Laufachsen 6 und 7 gerätefest verriegelt; der Benutzer hat die gewünschte Arbeitshöhe H festgelegt.

Zweckmäßig ist die Höheneinstellvorrichtung 8 durch eine Verkleidung 24 vollständig abgedeckt, wodurch sowohl ein unbeabsichtigtes Verstellen verhindert ist als auch das Eindringen von Schmutz, Gras oder dgl. vermieden wird. Damit kann eine hohe Funktionssicherheit gewährleistet werden.

Die Verkleidung 24 der Höheneinstellvorrichtung 8 erfolgt über die gesamte Länge des Stellhebels 9, wobei über der Länge des Stellhebels 9 an einer geeigneten Stelle ein Sichtfenster 25 ausgebildet ist, unter dem ein Anzeigeelement 26 angeordnet ist, welches über eine Lagerzunge 27 mit dem Stellhebel 9 verbunden ist. Da eine Höhenverstellung des Gerätegehäuses 2 eine Längsverschiebung des Stellhebels 9 relativ zum Gerätegehäuse 2 bedingt, liegt das Anzeigeelement 26 unter dem Fenster 25 abhängig von der eingestellten Höhe in unterschiedlichen Längslagen. Dadurch ist eine geeignete optische Anzeigevorrichtung für die eingestellte Höhe gegeben. Der Stellhebel 9 wird aufgrund seiner Längsbewegung auch Translationshebel genannt.

Mit der Höhenverstellung des Gerätegehäuses 2 wird auch die relative Höhe des Lenkers 31 relativ zur Aufstandsfläche 3 geändert, da der Lenker 31 über das Lenkergestänge 30 gehäusefest am Gerätegehäuse 2 angebunden ist. Dazu sind am Gerätegehäuse 2 starre, unbewegliche Tragflansche 32 festgelegt, die im Bereich ihrer dem Gehäuse 2 abgewandten Enden mit einer Versteifungsstrebe 33 verbunden sind. In den Tragflanschen 32 sind die Endabschnitte 34 des Lenkergestänges 30 gehalten, wobei der Endabschnitt 34 des Lenkergestänges 30 und der Endabschnitt 35 eines Tragflansches 32 einander überlappen. Im Bereich des Endes 37 eines Tragflansches 32 ist das Lenkergestänge um eine Verschwenkachse 36 verschwenkbar festgelegt, wobei die Verschwenkachse 36 etwa parallel zu den Laufachsen 6 und 7 liegt. Um diese Verschwenkachse 36 ist das gesamte Lenkergestänge 30 verschwenkbar, so daß der Lenker 31 selbst in der Höhe einstellbar ist. Aufgrund des langen Hebels zwischen der Verschwenkachse 36 und dem Lenker 31 führen bereits kleine Verschwenkwinkel zu großen Höhenänderungen des Lenkers 31, wodurch nicht nur eine Anpassung an die eingestellte Arbeitshöhe sondern auch in einfacher Weise eine Anpassung an die Größe der Bedienungsperson möglich ist.

Das Ende 38 des Lenkergestänges 30 weist einen Führungsschlitz 39 auf, der vorzugsweise als ein Teilringabschnitt ausgebildet ist, dessen Zentrum mit der Verschwenkachse 36 zusammenfällt.

Beide Enden 38 des U-förmigen Lenkergestänges 30 sind von einer gemeinsamen Spannstange 40 durchragt, die sich im Bereich der Versteifungsstrebe 33 von dem auf der einen Seite des Gerätegehäuses 2 angeordneten Tragflansch 32 bis zu dem auf der anderen Seite des Gerätegehäuses 2 angeordneten Tragflansch 32 erstreckt. Das eine Ende 41 der Spannstange 40 weist einen Spannkopf 42 auf, der einteilig mit der Spannstange 40 ausgebildet sein kann oder als Spannkopf unverlierbar auf das Ende der Spannstange 40 montiert, zum Beispiel aufgeschraubt sein kann.

Das Ende 38 des Endabschnittes 34 des Lenkergestänges 30 liegt zwischen dem Spannkopf 42 und dem Tragflansch 32. Wird auf die Spannstange 40 axial eine Zugkraft aufgebracht, wird das Ende 38 zwischen dem Spannkopf 42 und dem Tragflansch 32 festgeklemmt.

Zweckmäßig ist zwischen dem Ende 38 des Lenkergestänges 30 und der zugewandten Seite des Tragflansches 32 eine reibwerterhöhende Flächenbearbeitung vorgesehen sein, um auch bei geringen Klemmkräften ein sicheres Festlegen des Lenkergestänges 30 zu erzielen.

Im gezeigten Ausführungsbeispiel ist zwischen dem Ende 38 des Lenkergestänges 30 und der zugewandten Seite des Tragflansches 32 eine Verrastung vorgesehen, die aus einer Rastzahnung 43 auf der Fläche des Tragflansches 32 und einer entsprechenden Gegenzahnung am Ende 38 des Lenkergestänges 30 gebildet ist. Auf diese Weise kann eine Art formschlüssige Festlegung der gewählten Verschwenkstellung erzielt werden.

Die Spannkraft wird über eine Stellmutter 44 aufgebracht, die am anderen Ende 45 der Spannstange 40 aufzuschrauben ist und im Ausführungsbeispiel einen Drehknauf zur werkzeuglosen, manuellen Betätigung aufweist. Wie in Fig. 1 gezeigt, liegt der Drehknauf der Stellmutter 44 seitlich gut zugänglich in der Verkleidung 24 des Arbeitsgerätes 1 und hat eine Größe, die dem Benutzer ohne großen Kraftaufwand ein einfaches Lösen der Feststellvorrichtung 23 für die Lenkerhöhenverstellung ermöglicht. Durch Zudrehen des Drehknaufes am Ende 45 der Spannstange 40 wird auf den auf der anderen Seite angeordneten Spannkopf 42 eine Zugkraft aufgebracht und somit auf beiden Seiten zugleich eine gleich große Spannkraft erzeugt. Durch die Zahnung 43 und die am Ende 38 ausgebildete Gegenzahnung 46 wird schon bei kleinen Klemmkräften ein formschlüssiger Eingriff sichergestellt, so daß die eingestellte Lenkerhöhe für den Betrieb des Gerätes sicher fixiert ist.

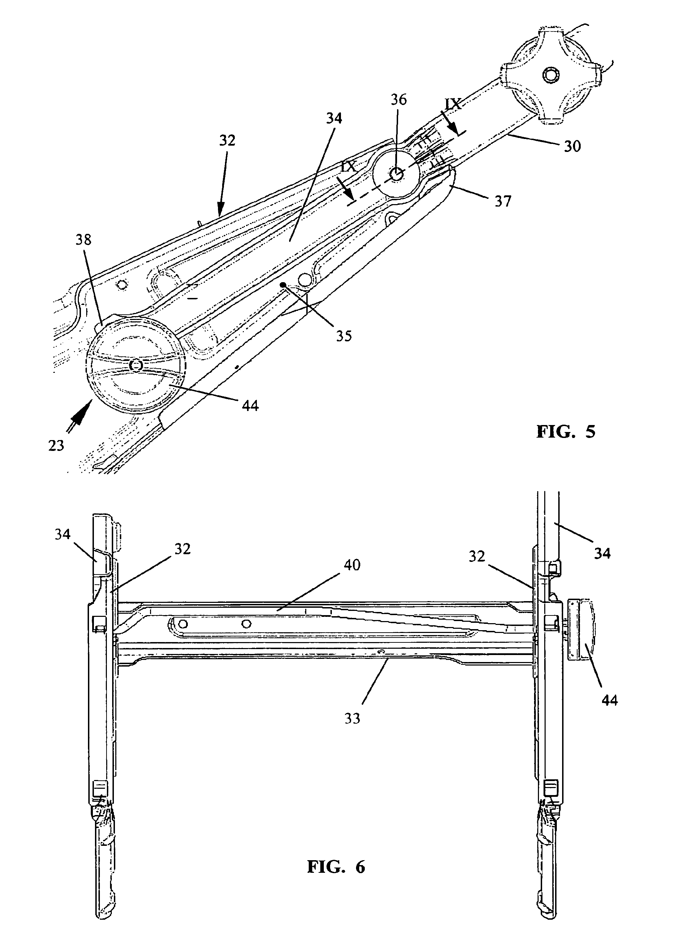

In bevorzugter Ausgestaltung ist die Zugstange 40 gekröpft, wie insbesondere Fig. 6 zeigt. Durch diese Kröpfung wird beim Aufbringen einer axialen Zugkraft eine Art elastisches Aufbiegen bewirkt, so daß eine permanente Vorspannung gegeben ist, die eine sichere Verriegelung der Lenkerhöheneinstellung gewährleistet. Da die Spannstange 40 im Bereich der Versteifungsstrebe 33 angeordnet ist, wird ein Ausweichen der Tragflansche 32 beim Aufbringen einer Spannkraft vermieden.

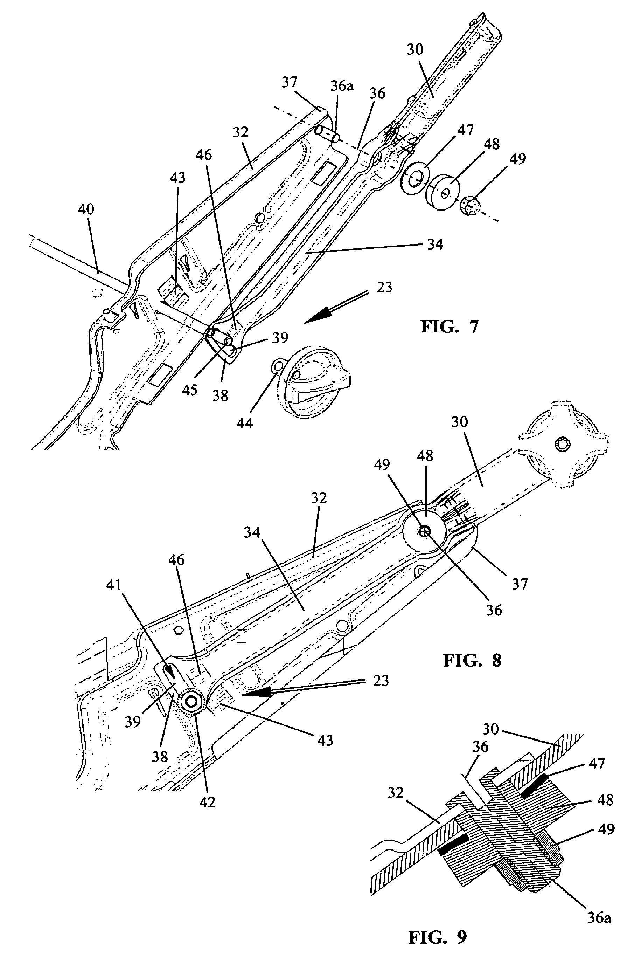

Wie den Figuren 7 und 9 zu entnehmen, ist auf der Verschwenkachse 36 des Lenkergestänges 30 vorteilhaft eine Tellerfeder 47 montiert, deren Federkraft den Endabschnitt 34 des Lenkergestänges 30 spielfrei an den Tragflansch 32 andrückt (Figur 9). Die Verschwenkachse 36 ist durch einen am Ende 37 des Tragflansches 32 gehaltenen Achsstummel 36a gebildet, auf den die Tellerfeder 47, eine Tellerfederaufnahme 48 und eine Befestigungsmutter 49 aufgefädelt wird. Durch Festziehen der Befestigungsmutter 49 auf dem Achsstummel 36a wird die Tellerfeder 47 vorgespannt, so daß der Endabschnitt 34 des Lenkergestänges 30 mit vorgegebener Federkraft am Tragflansch 32 anliegt. Durch die im Bereich des Endes 38 des Lenkergestänges 30 ausgebildete Rastzahnung 43 und die lenkergestängefeste Gegenzahnung 46 wird nach Lösen der Stellschraube die Gegenzahnung 46 des Lenkergestänges 30 unter Wirkung der Kraft der Tellerfeder 47 im Eingriff in der Rastzahnung 43 gehalten. Die Höhenlage des Lenkers kann nun vom Benutzer geändert werden, wobei die Gegenzahnung 46 federnd über die Rastzahnung 43 läuft. Dies wird durch das zugelassene axiale Spiel im Bereich der Tellerfeder 47 gewährleistet. Durch den federnden Eingriff bleibt jede vom Benutzer gewählte Höhenlage stabil, d. h., der Benutzer kann den Lenker 31 loslassen, ohne daß sich die Höhenlage durch die Gewichtskräfte selbständig ändert. Nach Festziehen der Stellschraube 44 ist eine vorgewählte Höhenlage fixiert, so daß die Lenkerkräfte sicher aufgenommen werden.

## Patentansprüche

1. Fahrbares Arbeitsgerät, insbesondere Rasenmäher, Vertikutierer oder dgl., mit einem Laufräder (4, 5) aufweisenden Gehäuse (2),
mit einem in dem Gehäuse (2) angeordneten, drehbaren Arbeitswerkzeug und mit einer Höheneinstellvorrichtung (8) zur Änderung der Arbeitshöhe (H) des Arbeitswerkzeugs relativ zur Aufstandsfläche (3) des Arbeitsgerätes (1), wobei die Höheneinstellvorrichtung (8) einen Stellhebel (9) umfaßt,
der über ein Rastelement (10) in vorgegebenen, die Arbeitshöhe bestimmenden Stellungen festlegbar ist,
und das Rastelement als verschwenkbarer Rasthebel (10) ausgebildet ist, und mit einem am Gehäuse (2) festgelegten Handgriff (20) zum Einleiten von Verstellkräften,
**dadurch gekennzeichnet,**
**dass** der Rasthebel (10) in dem Handgriff (20) angeordnet ist,
wobei der Rasthebel (10) in seiner Freigabestellung in die Kontur des Handgriffs (20) eintaucht und in seiner Raststellung aus der Kontur des Handgriffs (20) vorsteht, derart, dass der Handgriff (20) von einer Hand eines Benutzers vollständig umschlossen wird und die Verriegelung dadurch aufgehoben ist, um nun für die Höheneinstellung mit dieser einen Hand über den Handgriff das Gehäuse anzuheben oder niederzudrücken.

2. Arbeitsgerät nach Anspruch 1,
**dadurch gekennzeichnet, dass** das Rastelement (10) auf der dem Gehäuse zugewandten Seite des Handgriffs (20) angeordnet ist, wobei vorzugsweise der Rasthebel (10) am Stellhebel (9) der Höheneinstellvorrichtung (8) verrastend eingreift.

3. Arbeitsgerät nach Anspruch 1 oder 2,
**dadurch gekennzeichnet, dass** die Laufräder (4, 5) höhenverstellbar am Gehäuse (2) gehalten sind und der Stellhebel (9) mit seinem vorderen Ende (11) mit einer vorderen Radachse (6) und mit seinem hinteren Ende mit einer hinteren Radachse (7) verbunden ist, wobei der Stellhebel (9) vorzugsweise oberhalb des Gehäuses (2) verläuft und der Rasthebel (10) insbesondere an einem Bereich (16) des Stellhebels (9) eingreift, der zwischen den Laufradachsen (6, 7) liegt.

4. Arbeitsgerät nach einem der Ansprüche 1 bis 3,
**dadurch gekennzeichnet, dass** der Stellhebel (9) in Stellrichtung auf eine maximale Arbeitshöhe federbelastet ist.

5. Arbeitsgerät nach einem der Ansprüche 1 bis 4,
**dadurch gekennzeichnet, dass** der Stellhebel (9) ein Anzeigeelement (26) trägt, das unter einem gehäusefesten Fenster (25) liegt.

6. Arbeitsgerät nach einem der Ansprüche 1 bis 5,
**dadurch gekennzeichnet, dass** der Rasthebel (10) im Bereich (15) der Gehäuseanbindung eines Lenkergestänges (30) verschwenkbar gelagert ist und vorzugsweise der Handgriff (20) als Fortsetzung des Lenkergestänges (30) angeordnet ist, wobei das Lenkergestänge (30) insbesondere um eine Verschwenkachse (36) höhenverstellbar am Gehäuse (2) festgelegt ist.

7. Arbeitsgerät nach Anspruch 6,
**dadurch gekennzeichnet, dass** das Lenkergestänge (30) mit seinen gehäuseseitigen Endabschnitten (34) an gehäusefesten Tragflanschen (32) gehalten ist, wobei vorzugsweise der Endabschnitt (34) des Lenkergestänges (30) und der Endabschnitt (35) eines Tragflansches (32) einander überlappen.

8. Arbeitsgerät nach Anspruch 6 oder 7,
**dadurch gekennzeichnet, dass** im Bereich des Endes (37) des Tragflansches (32) das Lenkergestänge (30) verschwenkbar festgelegt ist und im Bereich des Endes (38) des Lenkergestänges (30) eine Feststellvorrichtung (23) angeordnet ist, die vorzugsweise eine Klemmvorrichtung ist.

9. Arbeitsgerät nach Anspruch 8,
**dadurch gekennzeichnet, dass** die Feststellvorrichtung (23) eine Spannstange (40) umfaßt, die beide Enden (38) des Lenkergestänges (30) durchragt und an einem Ende (45) der Spannstange (40) über eine Stellschraube (44) eine axiale Spannkraft aufbringbar ist, wobei die Stellschraube (44) vorzugsweise einen manuellen Drehknauf aufweist und die Spannstange (40) insbesondere gekröpft ist.

10. Arbeitsgerät nach einem der Ansprüche 6 bis 9,
**dadurch gekennzeichnet, dass** das Lenkergestänge (30) im Bereich der Verschwenkachse (36) mit Federkraft an den Tragflansch angedrückt ist, vorzugsweise von einer mitmontierten Tellerfeder (47), wobei insbesondere im Bereich des Endes (38) des Lenkergestänges (30) der Tragflansch (32) eine vorzugsweise geprägte Rastzahnung (43) aufweist und am Endabschnitt (34) des Lenkergestänges (30) eine entsprechende Gegenzahnung (46) ausgebildet ist.

## Claims

1. Mobile working implement, in particular a lawnmower, scarifier or the like, with a housing (2) provided with wheels (4, 5),
with a rotating working tool located in the housing (2) and with a height adjustment device (8) for changing the working height (H) of the working tool with respect to the ground surface (3) of the working implement (1), wherein the height adjustment device (8) comprises an adjusting lever (9) which can be located in preset positions determining the working height by means of a latching element (10),
and wherein the latching element is designed as a pivotable latching lever (10), and with a handle (20) fixed to the housing (2) for the introduction of adjusting forces,
**characterised in that**
the latching lever (10) is located in the handle (20),
wherein the latching lever (10) dips into the contour of the handle (20) in its release position and projects from the contour of the handle (20) in its latched position such that the handle (20) is completely enclosed by a hand of the user and the interlock is cancelled thereby in order to raise or lower the housing for height adjustment with this one hand by means of the handle.

2. Working implement according to claim 1,
**characterised in that** the latching element (10) is provided on the side of the handle (20) which faces the housing, the latching lever (10) preferably coming into latching engagement on the adjusting lever (9) of the height adjustment device (8).

3. Working implement according to claim 1 or 2,
**characterised in that** the wheels (4, 5) are held on the housing (2) in a manner capable of vertical adjustment, and **in that** the adjusting lever (9) is joined to a front wheel axle (6) with its front end (11) and to a rear wheel axle (7) with its rear end, wherein the adjusting lever (9) preferably extends above the housing (2) and the latching lever (10) in particular engages a region (16) of the adjusting lever (9) between the wheel axles (6, 7).

4. Working implement according to any of claims 1 to 3,
**characterised in that** the adjusting lever (9) is spring-loaded towards a maximum working height in the adjustment direction.

5. Working implement according to any of claims 1 to 4,
**characterised in that** the adjusting lever (9) supports an indicating element (26) which lies under a window (25) provided on the housing.

6. Working implement according to any of claims 1 to 5,
**characterised in that** the latching lever (10) is pivotably mounted in the region (15) of the housing tie-up of a handlebar linkage (30) and the handle (20) is preferably arranged as an extension of the handlebar linkage (30), the handlebar linkage (30) being in particular secured to the housing (2) in a manner capable of vertical adjustment about a pivot axis (36).

7. Working implement according to claim 6,
**characterised in that** the handlebar linkage (30) is held with its housing-side end sections (34) on a support flange (32) provided on the housing, the end section (34) of the handlebar linkage (30) and the end section (35) of a support flange (32) preferably overlapping each other.

8. Working implement according to claim 6 or 7,
**characterised in that** the handlebar linkage (30) is pivotably mounted in the region of the end (37) of the support flange (32), and **in that** a locking device (23) which is preferably represented by a clamping device is provided in the region of the end (38) of the handlebar linkage (30).

9. Working implement according to claim 8,
**characterised in that** the locking device (23) comprises a clamping rod (40) which passes through both ends (38) of the handlebar linkage (30), and **in that** an axial clamping force can be applied at one end (45) of the clamping rod (40) by means of an adjusting screw (44), the adjusting screw (44) being preferably provided with a manual rotary knob and the clamping rod (40) being in particular offset.

10. Working implement according to any of claims 6 to 9,
**characterised in that** the handlebar linkage (30) is pushed against the support flange in the region of the pivot axis (36) by spring force, preferably by a fitted Belleville spring (47), wherein the support flange (32) is in particular provided with preferably embossed latching toothing (43) in the region of the end (38) of the handlebar linkage (30) and a corresponding mating toothing (46) is formed on the end section (34) of the handlebar linkage (30).

## Revendications

1. Machine roulante, en particulier tondeuse à gazon, scarificateur ou machine similaire,
avec un carter (2) comportant des roues (4, 5),
avec un outil rotatif disposé dans le carter (2),
et avec un dispositif de réglage de hauteur (8) pour modifier la hauteur de travail (H) de l'outil par rapport à la surface d'appui (3) de la machine (1),
étant précisé que le dispositif de réglage de hauteur (8) comprend un levier de réglage (9) qui est apte à être bloqué par l'intermédiaire d'un élément de verrouillage (10) dans des positions prédéfinies qui définissent la hauteur de travail, et que l'élément de verrouillage est conçu comme un levier de verrouillage pivotant (10),
et avec une poignée (20) fixée au carter (2) pour introduire des forces de réglage, **caractérisée en ce que** le levier de verrouillage (10) est disposé dans la poignée (20),
le levier de verrouillage (10) entrant, dans sa position de déblocage, dans le contour de la poignée (20) et dépassant, dans sa position de verrouillage, du contour de la poignée (20), de telle sorte que la poignée (20) est complètement entourée par une main d'un utilisateur et que le verrouillage est ainsi neutralisé afin de soulever ou d'abaisser alors le carter en vue du réglage en hauteur avec cette main, par l'intermédiaire de la poignée.

2. Machine selon la revendication 1,
**caractérisée en ce que** l'élément de verrouillage (10) est disposé sur le côté de la poignée (20) tourné vers le carter, le levier de verrouillage (10) venant de préférence s'enclencher sur le levier de réglage (9) du dispositif de réglage de hauteur (8).

3. Machine selon la revendication 1 ou 2,
**caractérisée en ce que** les roues (4, 5) sont fixées au carter (2) de manière à pouvoir être réglées en hauteur et le levier de réglage (9) est relié avec son extrémité avant (11) à un essieu avant (6) et avec son extrémité arrière à un essieu arrière (7), le levier de réglage (9) s'étendant de préférence au-dessus du carter (2) et le levier de verrouillage (10) venant s'enclencher en particulier sur une zone (16) du levier de réglage (9) qui est située entre les essieux (6, 7).

4. Machine selon l'une des revendications 1 à 3,
**caractérisée en ce que** le levier de réglage (9) est contraint par ressort dans le sens de réglage vers une hauteur de travail maximale.

5. Machine selon l'une des revendications 1 à 4,
**caractérisée en ce que** le levier de réglage (9) porte un élément indicateur (26) qui se trouve sous une fenêtre (25) solidaire du carter.

6. Machine selon l'une des revendications 1 à 5,
**caractérisée en ce que** le levier de verrouillage (10) est monté pivotant dans la zone (15) de la liaison, sur le carter, d'une tringlerie de guidon (30), et la poignée (20) est de préférence disposée sous la forme d'un prolongement de la tringlerie de guidon (30), ladite tringlerie de guidon (30) étant fixée au carter (2) de manière à pouvoir être réglée en hauteur en particulier sur un axe de pivotement (36).

7. Machine selon la revendication 6,
**caractérisée en ce que** la tringlerie de guidon (30) est fixée avec ses parties d'extrémité (34) situées côté carter à des rebords de support (32) solidaires du carter, la partie d'extrémité (34) de la tringlerie de guidon (30) et la partie d'extrémité (35) d'un rebord de support (32) se recouvrant de préférence.

8. Machine selon la revendication 6 ou 7,
**caractérisée en ce que** dans la zone de l'extrémité (37) du rebord de support (32), la tringlerie de guidon (30) est fixée pivotante, et dans la zone de l'extrémité (38) de la tringlerie de guidon (30), il est prévu un dispositif de blocage (23) qui est constitué de préférence par un dispositif de serrage.

9. Machine selon la revendication 8,
**caractérisée en ce que** le dispositif de blocage (23) comprend un tirant (40) qui traverse les deux extrémités (38) de la tringlerie de guidon (30), et une force de serrage axiale est apte à être appliquée sur une extrémité (45) du tirant (40) par l'intermédiaire d'une vis de serrage (44), la vis de serrage (44) présentant de préférence un bouton tournant manuel, et le tirant (40) étant en particulier coudé.

10. Machine selon l'une des revendications 6 à 9,
**caractérisée en ce que** la tringlerie de guidon (30), dans la zone de l'axe de pivotement (36), est poussée par une force élastique contre le rebord de support, de préférence par une rondelle-ressort intégrée (47), étant précisé que le rebord de support (32) présente en particulier dans la zone de l'extrémité (38) de la tringlerie de guidon (30) une denture de verrouillage (43) de préférence formée par estampage, et qu'une denture opposée correspondante (46) est formée sur la partie d'extrémité (34) de la tringlerie de guidon (30).
